(19) **Europäisches Patentamt**
**European Patent Office**
**Office européen des brevets**

(11) **EP 3 051 439 A1**

(12) **EUROPEAN PATENT APPLICATION**

(43) Date of publication:
03.08.2016 Bulletin 2016/31

(51) Int Cl.:
*G06F 17/30* (2006.01)

(21) Application number: 15305100.8

(22) Date of filing: 29.01.2015

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Joy, Joshua**
**70435 Stuttgart (DE)**
• **Chen, Ruichuan**
**70435 Stuttgart (DE)**

(74) Representative: **2SPL Patentanwälte PartG mbB**
**Postfach 15 17 23**
**80050 München (DE)**

(54) **APPARATUSES, METHODS AND COMPUTER PROGRAMS FOR A PROXY SERVER AND A CLIENT NODE**

(57)    Embodiments relate to apparatuses, methods and computer programs suitable for a proxy server (100) and a client node (300) in a network (400). The network (400) further comprises at least one analyst node (200) and a plurality of client nodes (300). The apparatus (10) comprises one or more interfaces (12) to communicate with the at least one analyst node (200) and the plurality of client nodes (300). The apparatus (10) further comprises a control module (14) to receive information related to a query request from the at least one analyst node (200) through the one or more interfaces (12). The control module 14 is further configured to provide information related to a client query to at least a subset of the plurality of client nodes (300), in response to a request from the client nodes comprised in the subset of the plurality of client nodes (300), wherein the client query comprises at least the information related to the query content, the information related to the query privacy coefficient and the information related to the error of the query result. The control module 14 is further configured to receive information related to a noisy query result from one or more clients nodes of the subset of client nodes (300), wherein the information related of the noisy query result comprises a plurality of datasets comprising a predetermined amount of data. The control module 14 is further configured to generate information related to at least one dummy query result and forward the information related to the noisy query result and the information related to the at least one dummy query result to the at least one analyst node (200) through the one or more interfaces (12).

Fig. 3

## Description

Technical Field

Embodiments relate to apparatuses, methods and computer programs suitable for a proxy server and a client node, more specifically, but not exclusively, to providing information related to a noisy query result and information related to at least one dummy query result in response to information related to a query request.

Background

This section introduces aspects that may be helpful in facilitating a better understanding of the invention(s). Accordingly, the statements of this section are to be read in this light and are not to be understood as admissions about what is in the prior art or what is not in the prior art.

The analysis of large sets of data may be considered a major part of the digital economy today. Targeted data collection, such as online surveys conducted among customers of a brand, as well as data mining, such as the analysis of large amounts of data to detect trends may be considered key to the success of many business ventures.

Amid such analysis, concerns about the privacy or anonymity of the data being analyzed have risen. New devices or services, such as wearable health monitors, navigation systems and activity trackers, often collect information users often prefer to keep private. Yet such data may contain valuable information: For example, users may prefer to keep information related to a position and moving vector of a cell phone private, but using such information in anonymized form, together with information related to a signal strength of a mobile communication system may yield valuable insight for the providers of such mobile communication systems.

Randomized response is a surveying technique for collecting statistics on sensitive topics using structured survey interviews. It may allow respondents maintaining confidentiality while responding to sensitive issues. In randomized response, the outcome of a random event, such as the tossing of a coin, decides whether a (binary) question is answered truthfully or whether it is answered with a default answer. The real result from a number of results may be extrapolated in the analysis, while the privacy of the respondent may be preserved.

More information can be found in:

ERLINGSSON, U.; PIHUR, V.; KOROLOVA, A.; RAPPOR: Randomized Aggregatable Privacy-Preserving Ordinal Response, In Proceedings of the 2014 ACM SIGSAC Conference on Computer and Communications Security, ACM, 2014, p. 1054-1067;

CHEN, R., et al. Towards Statistical Queries over Distributed Private User Data, In NSDI, 2012, p. 169-182;

T.-H. H. Chan, E. Shi, D. Song, Private and Continual Release of Statistics, ACM Transactions on Information and System Security (TISSEC), Volume 14 Issue 3, November 2011;

T. Elahi, G. Danezis and I. Goldberg, PrivEx: Private Collection of Traffic Statistics for Anonymous Communication Networks, CACR 2014-08;

C. Dwork, K. Kenthapadi, F. McSherry, I. Mironov, and M. Naor, Our Data, Ourselves: Privacy Via Distributed Noise Generation, Advances in Cryptology (EUROCRYPT 2006);

V. Rastogi and S. Nath, Differentially Private Aggregation of Distributed Time-Series with Transformation and Encryption, MSR-TR-2009-186;

E. Shi, T-H. H. Chan, E. Rieffel, R. Chow, D. Song, Privacy-Preserving Aggregation of Time-Series Data. NDSS Symposium 2011;

A. Friedman, I. Sharfman, D. Keren, A. Schuster, Privacy-Preserving Distributed Stream Monitoring, Proceedings of the Network and Distributed System Security Symposium (NDSS) 2014; and

Q. Li, and G. Cao, Efficient Privacy-Preserving Stream Aggregation in Mobile Sensing with Low Aggregation Error, The 13th Privacy Enhancing Technologies Symposium (PETS), 2013.

Summary of illustrative Embodiments

Some simplifications may be made in the following summary, which is intended to highlight and introduce some aspects of the various exemplary embodiments, but such simplifications are not intended to limit the scope of the invention(s). Detailed descriptions of a preferred exemplary embodiment adequate to allow those of ordinary skill in the art to make and use the inventive concepts will follow in later sections.

Various embodiments provide apparatuses, methods and computer programs suitable for a proxy server and a client node. Analyst nodes may provide queries on data provided by client nodes. Proxy servers may collect and/or aggregate such queries and provide the queries, or at least a subset of the information comprised in the queries, to the client nodes. The client nodes may decide whether to respond to a query, for example based on a privacy budget. The client may add statistical noise to the result, to further improve its privacy, for example using randomized response. The proxy may then forward the result from the client node to the analyst nodes, and may add additional noise, e.g. using an adaption of differential privacy suitable for such a scenario. The queries might be run either on real-time data, e.g. using a streaming network and time windows/sliding windows, and/or on collected historical data.

Embodiments provide an apparatus suitable for a proxy server in a network. The network further comprises at least one analyst node and a plurality of client nodes. The apparatus comprises one or more interfaces to communicate with the at least one analyst node and the plurality of client nodes. The apparatus further comprises a control module to receive information related to a query request from the at least one analyst node through the one or more interfaces. The information related to the query request comprises information related to a query content, information related to a query privacy coefficient, and information related to an error of a query result. The control module is further configured to provide information related to a client query to at least a subset of the plurality of client nodes, in response to a request from the client nodes comprised in the subset of the plurality of client nodes. The client query comprises at least the information related to the query content, the information related to the query privacy coefficient and the information related to the error of the query result. The control module is further configured to receive information related to a noisy query result from one or more client nodes of the subset of client nodes. The information related of the noisy query result comprises a plurality of datasets comprising a predetermined amount of data. The control module is further configured to generate information related to at least one dummy query result and forward the information related to the noisy query result and the information related to the at least one dummy query result to the at least one analyst node through the one or more interfaces. Adding dummy query results to the noisy query results received from the subset of client nodes may introduce an additional layer of privacy, which may inhibit the tracking of users and may enable the usage of such data amid privacy concerns.

In at least some embodiments, the control module may be configured to receive the information related to the noisy query result by extracting the information related to the noisy query result from a stream of information received through the one or more interfaces. Extracting the information related to the noisy query result from a stream of information, such as a streaming database, may enable a real-time response to currently open queries.

In various embodiments, the information related to the query request may further comprise information related to an epoch for the query. The control module may be configured to receive the information related to the noisy query result during a time window. The duration, the start and/or end point of the time window may be based on the information related to the epoch. Collecting the noisy query results during a fixed time window may enable analysts to estimate the duration of the data collection, may enable analysts to add temporal components to the analyses and may preserve space required for storing the information related to the noisy query result.

In various embodiments, the information related to the query request may further comprise information related to a desired number of results. The control module may be configured to receive the information related to the noisy query result during a time window. The duration of the time window may be based on the information related to the number of desired results. Collecting the noisy query results during a time window defined by a desired number of results may reduce the time needed to collect the desired number of results and may preserve space required for storing the information related to the noisy query result.

In at least some embodiments, the information related to the query request may further comprise information related to a desired number of results. The control module may be configured to reduce the time window if the quantity of the plurality of datasets violates a threshold. The threshold may be based on the information related to the desired number of results. Reducing the time window when a desired number of results is reached or surpassed by a factor may reduce the time needed to collect the desired number of results and may preserve space required for storing the information related to the noisy query result.

In various embodiments, the information related to the query request may further comprise information related to a desired number of results. The control module may be configured to increase a number of dummy query results comprised in the information related to the at least one dummy query result if the desired number of results is not reached within the time window. Collecting the noisy query results during a fixed time window, even with additional dummy query results, may enable analysts to estimate the duration of the data collection, may enable analysts to add temporal components to the analyses and may preserve space required for storing the information related to the noisy query result.

In at least some embodiments, the apparatus may further comprise a data storage module suitable for storing the information related to the noisy query results. The control module may be configured to store and/or retrieve the information related to the noisy query result using the data storage module. Storing the information related to the noisy query results may enable historical aggregate analytics on the information related to the noisy query results and may enable longer time windows.

In at least some embodiments, the control module may be further configured to provide the client query when a client of the plurality of client nodes connects to the proxy server. Providing the client query in response to a connection may enable the control module to distribute the client query without keeping an index of available clients and may enhance a scalability of the proxy server or a plurality of proxy servers.

In various embodiments, the control module may be further configured to reject or ignore the information related to the query result if the predetermined amount of data is exceeded, so pollution attacks by single clients may be avoided.

Embodiments further provide an apparatus suitable for a client node in a network. The network further comprises at least one proxy server and at least one analyst node. The apparatus comprises one or more interfaces to communicate with the at least one proxy server. The apparatus further comprises a control module to receive information related to a client query of the at least one analyst node from the at least one proxy server through the one or more interfaces. The information related to the client query comprises information related to the query content, information related to a privacy coefficient and information related to an error of a query result. The control module is further configured to determine information related to a noisy query result based on the information related to the client query. The information related to the noisy query result is at least partly falsified. The control module is further configured to provide the information related to the noisy query result to the at least one proxy server through the one or more interfaces. Providing the information related to the noisy query result at least partly falsified may provide additional privacy for the client node as no assertion about the validity of a single noisy query result might be made.

In at least some embodiments, the control module may be configured to determine information related to a privacy deficit based on the information related to the privacy coefficient. The control module may be configured to reject the provision of information related to the noisy query result based on a comparison of the information related to the privacy coefficient and/or the information related to the error of the query result and information related to a privacy threshold, which may provide additional privacy for the client node as it may enable a client node to set an arbitrary privacy threshold.

In at least some embodiments, the information related to the noisy query result may comprise at least one result component. The control module may be configured to select a result based on the query content or a randomly generated value for the at least one result component. Providing the information related to the noisy query result at least partly falsified by such a randomly generated value, e.g. based on a randomized response procedure, may provide additional privacy for the client node as no assertion about the validity of a single noisy query result might be made.

Embodiments further provide a method suitable for a proxy server in a network. The network further comprises at least one analyst node and a plurality of client nodes. The method comprises communicating with the at least one analyst node and the plurality of client nodes. The method further comprises receiving information related to a query request from the at least one analyst node. The information related to the query request comprises information related to a query content, information related to a query privacy coefficient, information related to a desired number of results, information related to an epoch for the query, and information related to an error of a query result. The method further comprises providing information related a client query to at least a subset of the plurality of client nodes. The client query comprises at least the information related to the query content, the information related to the query privacy coefficient and the information related to the error of the query result. The method further comprises receiving information related to a noisy query result from the plurality of client nodes. The information related of the noisy query result comprises a plurality of datasets comprising a predetermined amount of data. The method further comprises generating information related to at least one dummy query result and forwarding the information related to the noisy query result and the information related to the at least one dummy query result to the at least one analyst node.

Embodiments further provide a method suitable for a client node in a network. The network further comprises at least one proxy server and at least one analyst node. The method comprises communicating with the at least one proxy server. The method further comprises receiving information related to a client query of the at least one analyst node from the at least one proxy server. The information related to the client query comprises information related to the query content, information related to a privacy coefficient and information related to an error of a query result. The method further comprises determining information related to a noisy query result based on the information related to the client query. The information related to the noisy query result is at least partly falsified. The method further comprises forwarding the information related to the noisy query result to the at least one proxy server.

Embodiments further provide a computer program having a program code for performing at least one of the above methods, when the computer program is executed on a computer, a processor, or a programmable hardware component. A further embodiment is a computer readable storage medium storing instructions which, when executed by a computer, processor, or programmable hardware component, cause the computer to implement one of the methods described herein.

Brief description of the figures

Some other features or aspects will be described using the following non-limiting embodiments of apparatuses or methods or computer programs or computer program products by way of example only, and with reference to the accompanying figures, in which:

Fig. 1 illustrates a block diagram of an embodiment of an apparatus suitable for a proxy server in a network;

Fig. 2 illustrates a block diagram of an embodiment of an apparatus suitable for a proxy server further comprising a storage module;

Fig. 3 illustrates a block diagram of an embodiment of an apparatus suitable for a proxy server comprising a message broker and a data warehouse.

Fig. 4 illustrates a block diagram of an embodiment of an apparatus suitable for a client node in a network;

Fig. 5 illustrates a flow chart of an embodiment of a method suitable for a proxy server in a network; and

Fig. 6 illustrates a flow chart of an embodiment of a method suitable for a client in a network.

Description of Embodiments

Various example embodiments will now be described more fully with reference to the accompanying drawings in which some example embodiments are illustrated. In the figures, the thicknesses of lines, layers or regions may be exaggerated for clarity. Optional components are illustrated using broken, dashed or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Users are increasingly becoming concerned and may seek solutions to ensure privacy. At the same time, third party analysts may seek to understand user behaviors and trends through the use of both streaming and historical analytics. As users may continuously generate data on their local client nodes, this tension of storing private data locally yet allowing third party analysts to aggregate trends and perform analysis over large groups may yield an interesting dilemma and problem. In at least some embodiments, both near real time computations over streaming data and historical private aggregate analytics over user's private data that is both scalable and maintains user privacy may be enabled.

Users may continuously generate private data such as web sites visited, purchases, location, and health data. For example, there may be a strong demand to keep health data private as this data might be used in malicious manners by insurance companies for instance. However, health organizations and the medical field may find it useful to understand large scale trends ranging from the spread of influenza to health and illness of specific population segments.

Differential privacy may provide a mechanism to provide privacy by adding noise to user's answers. However, differential privacy is formulated for static databases. Recent work may have attempted to formulate an approach for distributed differential privacy; however these solutions may make strong assumptions (e.g. answers are too noisy sacrificing utility, trusted clients, susceptible to pollution attacks, key exchange), might not be scalable, or might not work for the streaming scenario. Other approaches may require users to be online, require expensive key sharing, and/or a single malicious user may be able to perform a pollution attack by answering a query with a very large answer that may distort the aggregate answer. Previous approaches also might not be able to obtain exact answers, might only be able to reliably identify the heavy hitter, might not be able to handle long standing queries, and might not deal with streaming data. Additionally, previous approaches may leak identifiers which may be used to track individuals and eventually correlate their answers.

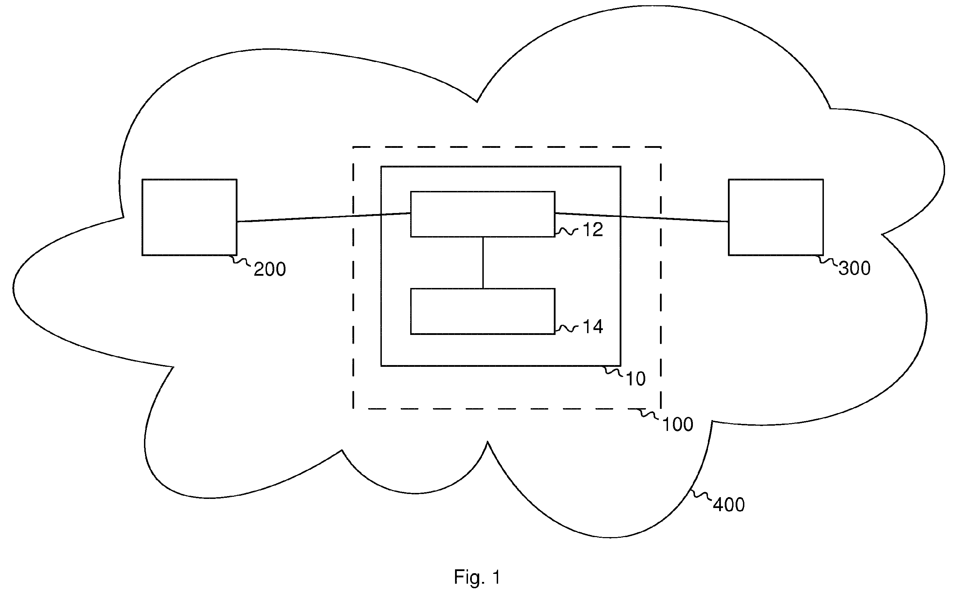

In at least some embodiments, nodes may continuously generate data which may be stored locally. A proxy server 100, as introduced in Fig. 1, might be considered honest but curious. At least one analyst nodes 200, as introduced in Fig. 1, may run counting queries. A plurality of client nodes 300, as introduced in Fig. 1, may, in at least some embodiments, maintain their data (to track their privacy budget without relying on a global authority to oversee all proxies). In at least some embodiments, the at least one analyst node 200 may wish to perform near real time computations over streaming data and historical aggregate analysis over users private data.

In the following, some embodiments for apparatuses, methods and computer programs will be described. Fig. 1 shows a block diagram of an embodiment of an apparatus 10 suitable for a proxy server 100 in a network 400. The network 400 further comprises at least one analyst node 200 and a plurality of client nodes 300. The apparatus 10 further comprises one or more interfaces 12 and a control module 14. The one or more interfaces 12 are coupled to the control module 14, the at least one analyst node 200 and the plurality of client nodes 300.

A proxy server 100 may correspond to a server acting as an intermediary between the at least one analyst node 200 and the plurality of client nodes 300. In embodiments, a proxy server may correspond to a software application running on a network node physically separated from the client nodes. This might be a dedicated server of an internet service provider or a provider of a mobile communication system or any other kind of dedicated, virtual or shared server that is configured to communicate with the at least one analyst node 200 and the plurality of client nodes 300.

In embodiments, the network 400 may correspond to any wired or wireless network, such as the internet, a mobile communication network, a Wide Area Network (WAN), a Local Area Network (LAN), a Wireless Local Area Network (WLAN), a Virtual Private Network (VPN), a streaming network, or any ad-hoc network between nodes sharing the same location.

The at least one analyst node 200 may, in embodiments, correspond to a software application running on a network node configured to communicate with the proxy server 100, or to a network node, such as a personal computer, running a software application configured to communicate with the proxy server 100. In embodiments, the software application may correspond to a statistic analysis software, or to a bridge between a statistic analysis software and the proxy server 100.

In embodiments, a client node may correspond to a smartphone, a cell phone, user equipment, radio equipment, a mobile, a mobile station, a laptop, a notebook, a personal computer, a Personal Digital Assistant (PDA), a Universal Serial Bus (USB) -stick, a car, a mobile relay transceiver for D2D communication, etc.

The apparatus 10 comprises one or more interfaces 12 to communicate with the at least one analyst node 200 and the plurality of client nodes 300. The one or more interfaces 12 may correspond to one or more inputs and/or outputs for receiving and/or transmitting information, which may be in digital (bit) values according to a specified code, within a module, between modules or between modules of different entities.

The apparatus 10 further comprises a control module 14 to receive information related to a query request from the at least one analyst node 200 through the one or more interfaces 12. In embodiments the control module 14 may be implemented using one or more processing units, one or more processing devices, any means for processing, such as a processor, a computer or a programmable hardware component being operable with accordingly adapted software. In other words, the described functions of the control module 14 may as well be implemented in software, which is then executed on one or more programmable hardware components. Such hardware components may comprise a general purpose processor, a Digital Signal Processor (DSP), a microcontroller, etc.

The information related to the query request comprises information related to a query content, information related to a query privacy coefficient, and information related to an error of a query result. In at least some embodiments, the query content may correspond to a query of a survey, which may be formulated in a structured query language, such as SQL, to collect information from the client nodes. In embodiments, an analyst may formulate a standing query and send it to the proxy server 100. The query might be bucketed with lower and upper bounds for the range of answers. In at least some embodiments, the control module may reject the query if the proxy determines that the query would violate users' privacy.

The query privacy coefficient may correspond to a coefficient influencing the number of additional dummy query results required to maintain a predefined level of noise in the result set, such as $\epsilon$ in the differential privacy concept. In at least some embodiments, the error of a query result may correspond to a chance factor used in a randomized response, which may be used by a client node to further improve the privacy of the result.

The control module 14 is further configured to provide information related to a client query to at least a subset of the plurality of client nodes 300, in response to a request from the client nodes comprised in the subset of the plurality of client nodes 300. In at least some embodiments, the control module 14 may be further configured to provide the client query when a client of the plurality of client nodes 300 connects to the proxy server 100 and/or when sending a keep-alive signal. For example, the request may correspond to a connection handshake and/or a keep-alive signal.

In some embodiments, a client may connect to the proxy server to retrieve the information related to the query content, information related to the privacy coefficient, information related to the desired number of results, information related to the epoch, and the information related to the error of the query result. The control module 14 may alleviate the need for each analyst to track which clients are online and vice versa for the clients to know which analysts are online. Embodiments may handle churn as interested clients may simply ask the proxy for available queries. The clients may choose which standing queries to answer.

The client query comprises at least the information related to the query content, the information related to the query privacy coefficient and the information related to the error of the query result.

The control module 14 is further configured to receive information related to a noisy query result from one or more client nodes of the subset of client nodes 300. The information related to the noisy query result comprises a plurality of datasets comprising a predetermined amount of data. In at least some embodiments, the noisy query result may correspond to a query result being at least partly falsified based on a randomized response approach. In some embodiments, the noisy query result may be based on a randomized response or similar statistical obfuscation approach. In at least some embodiments, the noisy query result may correspond to a sequence of binary query results, for example a Goldwasser-Micali-sequence.

In at least some embodiments, the client nodes of the subset of client nodes 300 may provide an answer to the query by answering '1' or '0' to each bucket using the Goldwasser-Micali bit-cryptosystem. This may guarantee that the client's answer is only '1' or '0' and may protect against pollution answer attacks. Each encryption may provide a different ciphertext even for the same plaintext. Such implementation may prove relatively efficient and may scale as the encryption is encrypting a single bit. The control module 14 might not check the legitimacy of the answer until the data is extracted during the sliding window, or time window as introduced later, phase. The proxy might verify that the Jacobi symbol is equal to '+1' and might discard answers which don't pass. In at least some embodiments, the control module 14 may be further configured to reject or ignore the information related to the noisy query result if the predetermined amount of data is exceeded, e.g. if the number of Goldwasser-Micali sequences does not match the number of expected result components.

The control module 14 is further configured to generate information related to at least one dummy query result. A dummy query result may, in embodiments, correspond to a randomly generated binary result with a fixed ratio (e.g. 50%) for every possible (binary) outcome over a large number of results. In various implementations, the control module 14 may maintain a pool of dummy query results, or coins, which may be used and shared across the queries for a single analyst for the noisy addition. Each client might periodically generate an encrypted unbiased coin using the Goldwasser-Micali bit-cryptosystem by randomly generating a value and encrypting. To defend against malicious clients the control module 14 might do the following: when receiving the coin the control module 14 might verify the Jacobi symbol and may drop coins which don't pass the verification; the control module 14 may blindly re-flip the coin by multiplying the coin with the control module's 14 own unbiased coin plus a modulo operation. In at least some embodiments, the number of noisy coins may be defined as $n = [(64 \; ln(2c)) / (\epsilon^2)] + 1$. At least n coins might be added to each bucket. The control module 14 may add different amounts of dummy query results comprised in the information related to at least one dummy query result, based on the information related to the privacy coefficient and/or the information related to the relative error of the query. In at least some embodiments, the relative error may be smaller than $\dfrac{1}{\text{the desired number of query results}}$ .

The control module 14 is further configured to forward the information related to the noisy query result and the information related to the at least one dummy query result to the at least one analyst node 200 through the one or more interfaces 12. In some embodiments, the control module 14 may add a small random delay when sending the information related to the noisy query result and the information related to the dummy query to the analyst. The control module 14 may also re-randomize the data if further protection is needed against correlation attacks. The control module 14 might also inform the analyst node 200 of n (number of coins) added to each bucket. The analyst may decrypt the data and coins, and sum the plaintext values and subtract $n/2$ to obtain the noisy aggregate answer.

In at least some embodiments, the control module 14 may be configured to receive the information related to the noisy query result by extracting the information related to the noisy query result from a stream of information received through the one or more interfaces 12. A stream of information may correspond to a streaming network, such as might be accessed by a Data Stream Management System (DSMS). In embodiments, the proxy server may correspond to a network gateway, wherein the data passing the network gateway may comprise the information related to the noisy query result.

In at least some embodiments, the information related to the query request may further comprise information related to an epoch for the query. The control module 14 may be configured to receive the information related to the noisy query result during a time window. The duration, the start and/or end point of the time window may be based on the information related to the epoch. In embodiments, the time window may correspond to a sliding window as used in a DSMS. The time window, or sliding window, may correspond to a period of time, for which results for a specified query are collected from a stream of information.

For example, to support sliding window operations, messages might be processed in the following manner. First, the client nodes might write data to a message broker topic, which may be comprised in the stream of information, as defined for this analyst and client query.

The proxy might use the sliding window to read windowed batches and counts and write the tuples to a new topic for pipelined processing, keeping the same parameters (analyst, query, noisy query result). The frequency of incoming data might be tracked in order to determine the window for adding differentially private noise addition. Little's law might be used where the desired number of results is the number of items in the queue; the epoch is used as the duration. The desired throughput might be desired number of results/epoch. The control module 14 may read from the new message broker topic (analyst, query tuple). Based on the count of results from the first stage of the pipeline process, the control module may add the dummy query results.

In various embodiments the information related to the query request may further comprise information related to a desired number of results. The control module 14 may be configured to receive the information related to the noisy query result during a time window. The duration of the time window may be based on the information related to the number of desired results.

In various other embodiments, the information related to the query request may further comprise information related to a desired number of results. The control module 14 may be configured to reduce the time window if the quantity of the plurality of datasets violates a threshold. The threshold may be based on the information related to the desired number of results. In both cases, the duration of the time window may be based on the desired number of results, either by reducing the window, or by setting an open time limit for the window, to close whenever a desired number of results is obtained. For example, if many client nodes reply to a query, the proxy server may receive more than the desired number of results within the analyst defined epoch, resulting in an effectively higher result throughput than the analyst expected. The proxy might then collect the answers for a smaller time window as the minimum clients reporting is greater than the desired number of results. The control module 14 may provide the information related to the noisy query results and the information related to the dummy query results to the analyst, and may inform the analyst that a faster epoch was achieved.

In various embodiments, the information related to the query request may further comprise information related to a desired number of results. The control module 14 may be configured to increase a number of dummy query results comprised in the information related to the at least one dummy query result if the desired number of results is not reached within the time window. If the desired number of results is not reached within the time window, the analyst's standing query might not be popular enough to receive at least the desired number of results within the epoch. The control module 14 might wait until more replies are received, thus exceeding the epoch or the proxy might add additional noise (and decrease the query privacy coefficient, e.g. $\epsilon$). The choice might be based on an agreement of the analyst with the control module 14 on how to handle this situation.

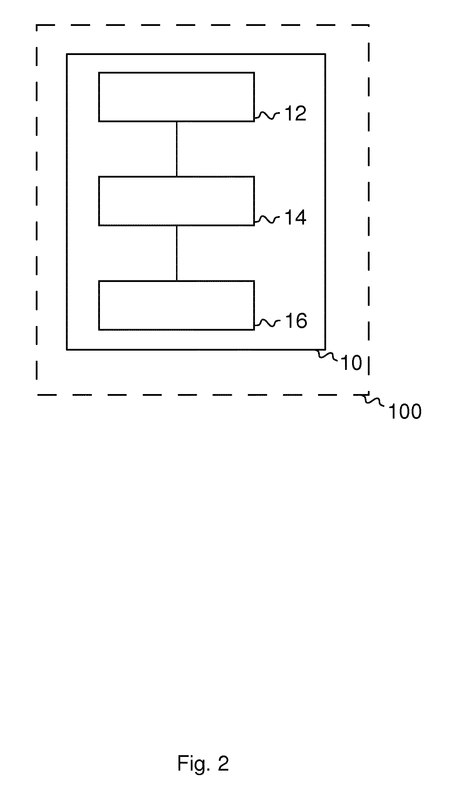

Fig. 2 illustrates a block diagram of an embodiment of an apparatus 10 comprising the one or more interfaces 12, the control module 14 and an optional data storage module 16. The control module 14 is coupled to the one or more interfaces 12 and the optional data storage module 16. In at least some embodiments, the apparatus 10 may further comprise a data storage module 16 suitable for storing the information related to the noisy query results. The control module 14 may be configured to store and/or retrieve the information related to the noisy query result using the data storage module 16. In embodiment the data storage module may comprise a computer readable storage medium, such as an magnetic or optical storage medium, e.g. a hard disk drive, a flash memory, Floppy-Disk, Random Access Memory (RAM), Programmable Read Only Memory (PROM), Erasable Programmable Read Only Memory (EPROM), or an Electronically Erasable Programmable Read Only Memory (EEPROM), a network storage, a data warehouse, a storage area network etc.

In addition to supporting near-real time queries, the control module 14 may, in embodiments, support analysts running historical queries over streaming data collected and stored in the data storage module 16. As the streaming counts may be encrypted per analyst, the analyst may be able to run historical queries over their own data. Assuming a honest but curious proxy, the proxy might inform each client every time an analyst runs a historical query, so an appropriate privacy deficit may be deducted. In at least some embodiments, additional privacy protection may be provided by the control module by re-randomizing the data before sending to the analyst node to protect against the analyst re-running the same query repeatedly and observing the pattern of numbers. The proxy may know the number of results when running the historical query, so appropriate noise might be added from the coin pool.

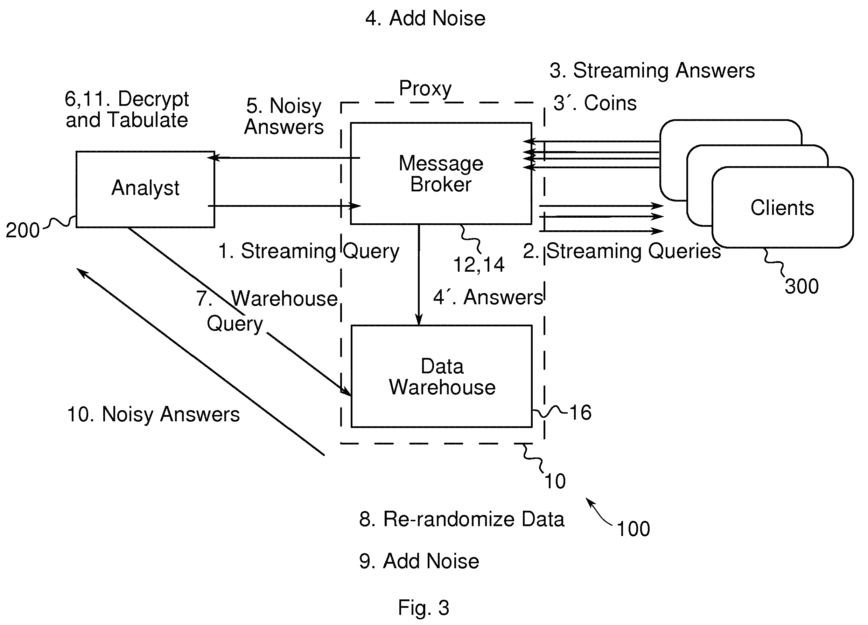

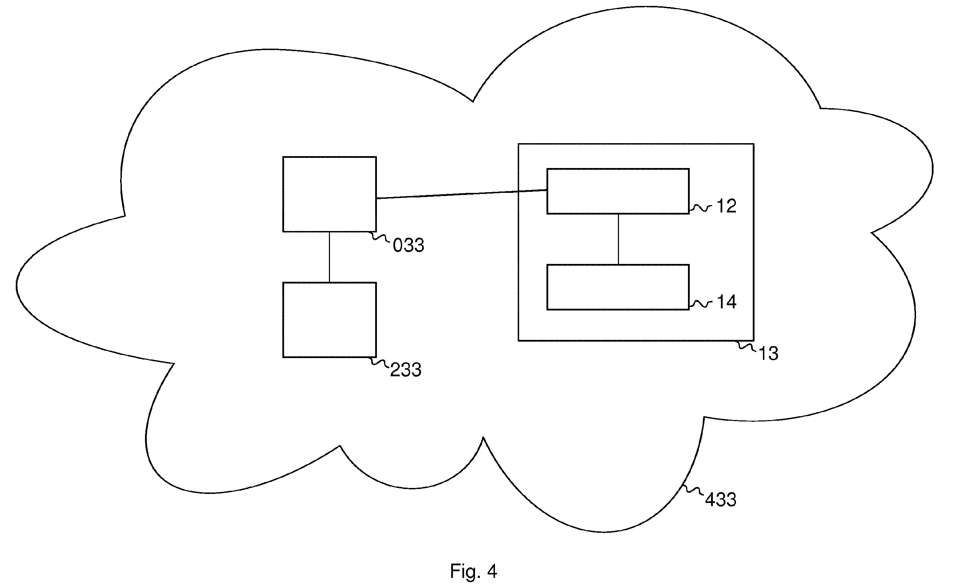

Fig. 3 illustrates a block diagram of an embodiment of an apparatus 10 comprising a message broker and a data warehouse, wherein the message broker may comprise the at least one interface 12 and the control module 14, and wherein the data warehouse may correspond to the data storage module 16. Fig. 4 further shows an analyst, which may correspond to the at least one analyst node 200, and clients, which may correspond to the one or more client nodes 300. The message broker may be coupled to the analyst, the clients, and the data warehouse. The analyst may be further logically coupled to the data warehouse for historical queries.

Fig. 4 illustrates a block diagram of an embodiment of an apparatus 30 suitable for a client node 300 in a network 400. The network 400 further comprises at least one proxy server 100 and at least one analyst node 200. The apparatus 30 comprises one or more interfaces 32 and a control module 34. The one or more interfaces 32 is/are coupled to the control module 34 and the at least one proxy server 100. The at least one proxy server is further coupled to the at least one analyst node 200.

The apparatus 30 comprises the one or more interfaces 32 to communicate with the at least one proxy server 100. The one or more interfaces 32 may correspond to one or more inputs and/or outputs for receiving and/or transmitting information, which may be in digital (bit) values according to a specified code, within a module, between modules or between modules of different entities.

The apparatus 30 further comprises the control module 34 to receive information related to a client query of the at least one analyst node 200 from the at least one proxy server 100 through the one or more interfaces 32. The information related to the client query comprises information related to a query content, information related to a privacy coefficient and information related to an error of a query result.

In embodiments the control module 34 may be implemented using one or more processing units, one or more processing devices, any means for processing, such as a processor, a computer or a programmable hardware component being operable with accordingly adapted software. In other words, the described functions of the control module 34 may as well be implemented in software, which is then executed on one or more programmable hardware components. Such hardware components may comprise a general purpose processor, a Digital Signal Processor (DSP), a micro-controller, etc.

The control module 34 is further configured determine information related to a noisy query result based on the information related to the client query. The information related to the noisy query result is at least partly falsified. In at least some embodiments, the information related to the noisy query result may comprise at least one result component. The control module 34 may be configured to select a result based on the query content or a randomly generated value for the at least one result component on a randomized response approach, for example. In at least some embodiments, the control module 34 may be configured to use randomized response with a 50% probability to select a result based on the query content or a randomly generated value for the at least one result component.

The control module 34 is further configured to provide the information related to the noisy query result to the at least one proxy server 100 through the one or more interfaces 32.

In at least some embodiments, the control module 34 may be configured to determine information related to a privacy deficit based on the information related to the privacy coefficient. The control module 34 may be configured to reject the provision of information related to the noisy query result based on a comparison of the information related to the privacy coefficient and/or the information related to the error of the query result and information related to a privacy threshold. The control module 34 may maintain its individual privacy deficit value, based on the information related to the privacy threshold and the information related to the privacy coefficient. When a client provides its answers, it may locally compute the privacy deficit. This may reduce the reliance of trust on the proxy server for accurate privacy deficit bookkeeping and may also reduce the requirement for a global authority to manage multiple independent proxies. The client's privacy may be preserved even in the case of a malicious proxy server which sends false or illegitimate query parameters. If the privacy coefficient is too small, then the answer may be noisy and privacy preserved. If the privacy coefficient is too large, then the privacy budget may be depleted faster than expected, yet privacy may still be preserved. In both cases client nodes may subtract the privacy coefficient and the relative error approximate error, which may also be approximated to 1/number of desired results, from their privacy deficit. In embodiments, the information related to the privacy deficit may be reset or reduced periodically and/or when a threshold is violated, or the information related to the privacy deficit may reflect all or a subset of previous queries. In at least some embodiments, the information related to the privacy deficit may comprise one or more categories, wherein the privacy coefficient and/or relative error are subtracted for categories matching the query.

In at least some embodiments, the noisy query result may correspond to a sequence of binary query results, or buckets, for example a Goldwasser-Micali-sequence. The control module 34 may answer "yes" or "no" for each bucket. Also, the control module 34 may have the choice and may be configured by local device policy of whether or not to answer a given query. In the case of a malicious proxy, the malicious proxy might never have the original "raw" data. Rather, the proxy may get a partial view of the client's data. The proxy may minimize and mitigate privacy loss, even in the case of a malicious proxy.

More details and aspects of the apparatus 30 (e.g. information related to a query content, information related to the privacy coefficient, information related to an error of a query result, information related to a noisy query result) are mentioned in connection with the proposed concept or one or more examples described above (e.g. Fig. 1 and 2). The apparatus 30 may comprise one or more additional optional features corresponding to one or more aspects of the proposed concept or one or more examples described above or below.

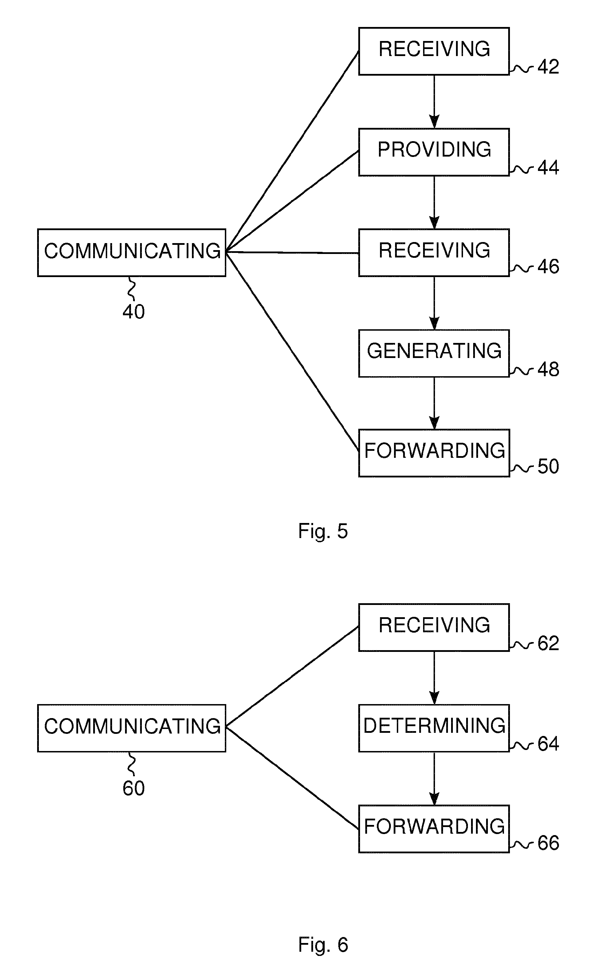

Fig. 5 shows a flow chart of an embodiment of a method suitable for a proxy server 100 in a network 400. The network 400 further comprises at least one analyst node 200 and a plurality of client nodes 300. The method comprises communicating 40 with the at least one analyst node 200 and the plurality of client nodes 300. The method further comprises receiving 42 information related to a query request from the at least one analyst node 200. The information related to the query request comprises information related to a query content, information related to a query privacy coefficient, information related to a desired number of results, information related to an epoch for the query, and information related to an error of a query result.

The method further comprises providing 44 information related a client query to at least a subset of the plurality of client nodes 300. The client query comprises at least the information related to the query content, the information related to the query privacy coefficient and the information related to the error of the query result. The method further comprises receiving 46 information related to a noisy query result from the plurality of client nodes 300. The information related of the noisy query result comprises a plurality of datasets comprising a predetermined amount of data. The method further comprises generating 48 information related to at least one dummy query result.

The method further comprises forwarding 50 the information related to the noisy query result and the information related to the at least one dummy query result to the at least one analyst node 200.

Fig. 6 shows a flow chart of an embodiment of a method suitable for a client node 300 in a network 400. The network 400 further comprises at least one proxy server 100 and at least one analyst node 200. The method comprises communicating 60 with the at least one proxy server 100. The method further comprises receiving 62 information related to a client query of the at least one analyst node 200 from the at least one proxy server 100. The information related to the client query comprises information related to the query content, information related to a privacy coefficient and information related to an error of a query result.

The method further comprises determining 64 information related to a noisy query result based on the information related to the client query. The information related to the noisy query result is at least partly falsified. The method further comprises forwarding 66 the information related to the noisy query result to the at least one proxy server 100.

Some embodiments comprise a digital control circuit installed within the apparatus for performing the method. Such a digital control circuit, e.g. a Digital Signal Processor (DSP), needs to be programmed accordingly. Hence, yet further embodiments also provide a computer program having a program code for performing embodiments of the method, when the computer program is executed on a computer, a digital processor, or a programmable hardware component. A further embodiment is a computer readable storage medium storing instructions which, when executed by a computer, processor, or programmable hardware component, cause the computer to implement one of the methods described herein.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for controlling", "means for transmitting", "means for receiving", "means for transceiving", "means for processing", etc., may be provided through the use of dedicated hardware, such as "a controller", "a transmitter", "a receiver", "a transceiver", "a processor", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

At least some embodiments may scale as a number of client nodes are added to the system and/or as the number of analyst queries run is increased. In at least some embodiments, the control module 14 may add the required number of dummy query results when there are bursty streams or there is a lack of responses.

Users may continuously generate data which they wish to maintain privately either locally in their devices or in personal data vaults in the cloud. At least some embodiments may enable private aggregate analytics with exact answers over distributed nodes that may be scalable in the amount of data generated, the number of nodes, and/or the number of queries. Embodiments may allow for churn where users may be online or go offline. At least some embodiments may provide utility so that the analytics provide meaningful answers, be robust to collusion between a proxy and analyst, and/or provide protection against pollution attacks, where a client node may invent a large answer to distort the aggregate answer accuracy. At least some embodiments may enable both private streaming and private warehousing queries.

At least some embodiments may scale to millions of users that may be distributed in different geographic locations. As client nodes may be mobile devices or nodes may experience failure, at least some embodiments may allow for client churn might not require all nodes are online.

In at least some embodiments, if a proxy colludes with the analyst by sharing data, the client node's privacy may still be protected. A malicious client node might not be able to provide incorrect answers in a way which will greatly reduce the accuracy of the aggregate queries. At least some embodiments may utilize sampling when necessary.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

## Claims

1. An apparatus (10) suitable for a proxy server (100) in a network (400), the network (400) further comprising at least one analyst node (200) and a plurality of client nodes (300), the apparatus (10) comprising one or more interfaces (12) to communicate with the at least one analyst node (200) and the plurality of client nodes (300);
   a control module (14) to:

   receive information related to a query request from the at least one analyst node (200) through the one or more interfaces (12), the information related to the query request comprising information related to a query content, information related to a query privacy coefficient, and information related to an error of a query result;
   provide information related to a client query to at least a subset of the plurality of client nodes (300), in response to a request from the client nodes comprised in the subset of the plurality of client nodes (300), wherein the client query comprises at least the information related to the query content, the information related to the query privacy coefficient and the information related to the error of the query result;
   receive information related to a noisy query result from one or more clients nodes of the subset of client nodes (300), wherein the information related of the noisy query result comprises a plurality of datasets comprising a predetermined amount of data;
   generate information related to at least one dummy query result; and
   forward the information related to the noisy query result and the information related to the at least one dummy query result to the at least one analyst node (200) through the one or more interfaces (12).

2. The apparatus (10) of claim 1, wherein the control module (14) is configured to receive the information related to the noisy query result by extracting the information related to the noisy query result from a stream of information received through the one or more interfaces (12).

3. The apparatus (10) of claim 2, wherein the information related to the query request further comprises information related to an epoch for the query, and wherein the control module (14) is configured to receive the information related to the noisy query result during a time window, wherein the duration, the start and/or end point of the time window is/are based on the information related to the epoch.

4. The apparatus (10) of claim 2, wherein the information related to the query request further comprises information related to a desired number of results, and wherein the control module (14) is configured to receive the information related to the noisy query result during a time window, and wherein the duration of the time window is based on the information related to the number of desired results.

5. The apparatus (10) of claim 3, wherein the information related to the query request further comprises information related to a desired number of results, and wherein the control module (14) is configured to reduce the time window if the quantity of the plurality of datasets violates a threshold, wherein the threshold is based on the information related to the desired number of results.

6. The apparatus (10) of claim 3, wherein the information related to the query request further comprises information related to a desired number of results, and wherein the control module (14) is configured to increase a number of dummy query results comprised in the information related to the at least one dummy query result if the desired number of results is not reached within the time window.

7. The apparatus (10) of claim 2 further comprising a data storage module (16) suitable for storing the information related to the noisy query results, wherein the control module (14) is configured to store and/or retrieve the information related to the noisy query result using the data storage module (16).

8. The apparatus (10) of claim 1, wherein the control module (14) is further configured to provide the client query when a client of the plurality of client nodes (300) connects to the proxy server (100).

9. The apparatus (10) of claim 1, wherein the control module (14) is further configured to reject or ignore the information related to the noisy query result if the predetermined amount of data is exceeded.

10. An apparatus (30) suitable for a client node (300) in a network (400), the network (400) further comprising at least one proxy server (100) and at least one analyst node (200), the apparatus (30) comprising one or more interfaces (32) to communicate with the at least one proxy server (100); a control module (34) to:

receive information related to a client query of the at least one analyst node (200) from the at least one proxy server (100) through the one or more interfaces (32), the information related to the client query comprising information related to the query content, information related to the a privacy coefficient and information related to an error of a query result; determine information related to a noisy query result based on the information related to the client query, the information related to the noisy query result being at least partly falsified; and provide the information related to the noisy query result to the at least one proxy server (100) through the one or more interfaces (32).

11. The apparatus (30) of claim 10, wherein the control module (34) is configured to determine information related to a privacy deficit based on the information related to the privacy coefficient, and wherein the control module (34) is configured to reject the provision of information related to the noisy query result based on a comparison of the information related to the privacy coefficient and/or the information related to the error of the query result and information related to a privacy threshold.

12. The apparatus (30) of claim 10, wherein the information related to the noisy query result comprises at least one result component, and wherein the control module (34) is configured to select a result based on the query content or a randomly generated value for the at least one result component.

13. A method suitable for a proxy server (100) in a network (400), the network (400) further comprising at least one analyst node (200) and a plurality of client nodes (300), the method comprising communicating (40) with the at least one analyst node (200) and the plurality of client nodes (300); receiving (42) information related to a query request from the at least one analyst node (200), the information related to the query request comprising information related to a query content, information related to a query privacy coefficient, information related to a desired number of results, information related to an epoch for the query, and information related to an error of a query result; providing (44) information related a client query to at least a subset of the plurality of client nodes (300), wherein the client query comprises at least the information related to the query content, the information related to the query privacy coefficient and the information related to the error of the query result;

receiving (46) information related to a noisy query result from the plurality of client nodes (300), wherein the information related of the noisy query result comprises a plurality of datasets comprising a predetermined amount of data;

generating (48) information related to at least one dummy query result; and forwarding (50) the information related to the noisy query result and the information related to the at least one dummy query result to the at least one analyst node (200).

14. A method suitable for a client node (300) in a network (400), the network (400) further comprising at least one proxy server (100) and at least one analyst node (200), the method comprising

communicating (60) with the at least one proxy server (100);

receiving (62) information related to a client query of the at least one analyst node (200) from the at least one proxy server (100), the information related to the client query comprising information related to the query content, information related to the a privacy coefficient and information related to an error of a query result;

determining (64) information related to a noisy query result based on the information related to the client query, the information related to the noisy query result being at least partly falsified; and

forwarding (66) the information related to the noisy query result to the at least one proxy server (100).

15. A computer program having a program code for performing at least one of the methods of claims 13 and 14, when the computer program is executed on a computer, a processor, or a programmable hardware component.

Fig. 1

Fig. 2

4. Add Noise

3. Streaming Answers

6,11. Decrypt and Tabulate

Proxy

3´. Coins

5. Noisy Answers

Analyst

Message Broker

Clients

200

1. Streaming Query

12,14

2. Streaming Queries

4´. Answers

300

7. Warehouse Query

Data Warehouse

16

10. Noisy Answers

10

8. Re-randomize Data

100

9. Add Noise

Fig. 3

EP 3 051 439 A1

Fig. 4

RECEIVING ~42

PROVIDING ~44

COMMUNICATING
40

RECEIVING ~46

GENERATING ~48

FORWARDING ~50

Fig. 5

RECEIVING ~62

COMMUNICATING
60

DETERMINING ~64

FORWARDING ~66

Fig. 6

Europäisches
Patentamt

European
Patent Office

Office européen
des brevets

# EUROPEAN SEARCH REPORT

Application Number

EP 15 30 5100

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RUICHUAN CHEN, ALEXEY REZNICHENKO, PAUL FRANCIS ET AL: "Towards Statistical Queries over Distributed Private User Data", USENIX,, 11 April 2013 (2013-04-11), pages 1-14, XP061014285, [retrieved on 2013-04-11] * sections 1, 3 and 5; figures 1-3 * | 1-15 | INV. G06F17/30 |

TECHNICAL FIELDS
SEARCHED      (IPC)

G06F

The present search report has been drawn up for all claims

| Place of search | Date of completion of the search | Examiner |
|---|---|---|
| Munich | 24 August 2015 | Hackelbusch, Richard |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## REFERENCES CITED IN THE DESCRIPTION

**Non-patent literature cited in the description**

- RAPPOR: Randomized Aggregatable Privacy-Preserving Ordinal Response. **ERLINGSSON, U. ; PIHUR, V. ; KOROLOVA, A.** Proceedings of the 2014 ACM SIGSAC Conference on Computer and Communications Security. ACM, 2014, 1054-1067
- **CHEN, R. et al.** Towards Statistical Queries over Distributed Private User Data. *NSDI,* 2012, 169-182
- **T.-H. H. CHAN ; E. SHI ; D. SONG.** Private and Continual Release of Statistics. *ACM Transactions on Information and System Security (TISSEC),* November 2011, vol. 14 (3
- **T. ELAHI ; G. DANEZIS ; I. GOLDBERG.** PrivEx: Private Collection of Traffic Statistics for Anonymous Communication Networks. *CACR 2014-08,* August 2014

- **C. DWORK ; K. KENTHAPADI ; F. MCSHERRY ; I. MIRONOV ; M. NAOR.** Our Data, Ourselves: Privacy Via Distributed Noise Generation. *Advances in Cryptology (EUROCRYPT,* 2006
- **V. RASTOGI ; S. NATH.** Differentially Private Aggregation of Distributed Time-Series with Transformation and Encryption. *MSR-TR-2009-186,* 2009
- **E. SHI ; T-H. H. CHAN ; E. RIEFFEL ; R. CHOW ; D. SONG.** *Privacy-Preserving Aggregation of Time-Series Data. NDSS Symposium,* 2011
- **A. FRIEDMAN ; I. SHARFMAN ; D. KEREN ; A. SCHUSTER.** Privacy-Preserving Distributed Stream Monitoring. *Proceedings of the Network and Distributed System Security Symposium (NDSS),* 2014
- **Q. LI ; G. CAO.** Efficient Privacy-Preserving Stream Aggregation in Mobile Sensing with Low Aggregation Error. *The 13th Privacy Enhancing Technologies Symposium (PETS),* 2013